# EUROPEAN PATENT APPLICATION

(11) **EP 3 131 024 A1**
(43) Date of publication of application: **15.02.2017**
(21) Application number: 14888845.6
(22) Date of filing: 07.04.2014
(51) Int. Cl.: G06F 17/50

(54) **CIRCUIT DESIGN DEVICE AND CIRCUIT DESIGN PROGRAM**

(71) Applicant: Mitsubishi Electric Corporation, Chiyoda-ku Tokyo 100-8310 (JP)
(72) Inventor: TAKASHINA, Nobuhide, Tokyo 100-8310 (JP); KAWAI, Takehiro, Tokyo 100-8310 (JP); YAMAGUCHI, Keita, Tokyo 100-8310 (JP)
(74) Representative: Moore, Graeme Patrick
(86) International application number: PCT/JP2014/060073
(87) International publication number: WO 2015/155815

(57) **Abstract**

A delay time calculation unit (120) calculates a delay time required to execute a computation path when an error countermeasure step is inserted into the computation path per computation path included in a scheduled CDFG file (192). An inserted graph selection unit (121) selects a computation path for which the delay time does not exceed a target time as inserted graph. An error countermeasure insertion unit (122) inserts an error countermeasure notation indicating the error countermeasure step into the inserted graph.

## Description

### Technical Field

The present invention relates to a technique for designing an integrated circuit.

### Background Art

As semiconductor integrated circuits become minute with lower voltage, influences by software errors, which are problematic in semiconductor integrated circuits for outer space, are increasing, and countermeasure against the software errors are emphasized also in the semiconductor integrated circuits for ground.

There are widely known a method for duplexing a logic circuit and a method using triple modular redundancy (TMR) as countermeasure against the software errors.

With the method for duplexing a logic circuit, the signal values of two logic circuits are compared thereby to detect an error of either of the signal values.

With the method using TMR, one signal value is selected from the signal values of three logic circuits by majority thereby to correct an error of any signal value.

However, when an error countermeasure circuit described above is added to a semiconductor integrated circuit designed in RTL description (RTL: register transfer level), a delay time in the semiconductor integrated circuit is further increased than when it is not subjected to the countermeasure, and an operable frequency (operation frequency) is lowered.

On the other hand, there is a technique called high-level synthesis (Patent Literature 1, for example)

With such a technique, RTL description including description of hardware such as arithmetic circuit or flip-flop is generated from operation description described in high-level language (such as SystemC) depending on a user-desired operation frequency.

However, a method for enhancing reliability on software errors is not generally employed during high-level synthesis, and RTL with resistance to software errors cannot be generated from the operation description. Therefore, it is not possible to solve a problem that an operation frequency of a circuit is deteriorated when RTL after high-level synthesis is modified and double, triple logic circuit or the like is implemented.

### Citation List

### Patent Literature

Patent Literature 1: JP 2011-013823 A
Patent Literature 2: JP 2010-257003 A
Patent Literature 3: JP 2003-157294 A

### Summary of Invention

### Technical Problem

It is an object of the present invention to enable an integrated circuit including an error countermeasure circuit and operating at a desired operation frequency to be designed.

### Solution to Problem

A circuit design device according to the present invention includes:
a divided graph acquisition unit to acquire a plurality of divided graphs generated by dividing a control data flow graph indicating a control data flow of an integrated circuit;
an execution time calculation unit to calculate an execution time required to execute a division flow when an error countermeasure step is inserted into the division flow indicated by a divided graph per divided graph among the plurality of divided graphs;
an inserted graph selection unit to select a divided graph for which the execution time does not exceed a target time as inserted graph from among the plurality of divided graphs based on each execution time calculated by the execution time calculation unit; and
an error countermeasure insertion unit to insert an error countermeasure notation indicating the error countermeasure step into the inserted graph selected by the inserted graph selection unit.

### Advantageous Effects of Invention

According to the present invention, it is possible to insert an error countermeasure notation into a control data flow graph such that an execution time does not exceed a target time.

Then, by use of the control data flow graph, it is possible to design an integrated circuit including an error countermeasure circuit and operating at a desired operation frequency.

### Brief Description of Drawings

Fig. 1 is a functional structure diagram of a circuit design device 100 according to a first embodiment.
Fig. 2 is a flowchart illustrating a flow of circuit design processing of the circuit design device 100 according to the first embodiment.
Fig. 3 is a diagram illustrating a CDFG file 192 according to the first embodiment by way of example.
Fig. 4 is a diagram illustrating the scheduled CDFG file 192 according to the first embodiment by way of example.
Fig. 5 is a diagram illustrating a circuit library 182 according to the first embodiment by way of example.
Fig. 6 is a diagram illustrating an error countermeasure library 183 according to the first embodiment by way of example.
Fig. 7 is a diagram illustrating the counter-error CDFG file 192 according to the first embodiment by way of example.
Fig. 8 is a diagram illustrating a delay time list 193 according to the first embodiment by way of example.
Fig. 9 is a diagram illustrating an inserted graph list 194 according to the first embodiment by way of example.
Fig. 10 is a diagram illustrating the counter-error CDFG file 192 according to the first embodiment by way of example.
Fig. 11 is a diagram illustrating an example of hardware structure of the circuit design device 100 according to the first embodiment.
Fig. 12 is a functional structure diagram of the circuit design device 100 according to a second embodiment.
Fig. 13 is a flowchart illustrating a flow of circuit design processing of the circuit design device 100 according to the second embodiment.
Fig. 14 is a functional structure diagram of the circuit design device 100 according to a third embodiment.
Fig. 15 is a flowchart illustrating a flow of circuit design processing of the circuit design device 100 according to the third embodiment.
Fig. 16 is a flowchart illustrating a flow of circuit design processing of the circuit design device 100 according to the third embodiment.
Fig. 17 is a flowchart illustrating a flow of circuit design processing of the circuit design device 100 according to the third embodiment.
Fig. 18 is a diagram illustrating the scheduled CDFG file 192 according to the third embodiment by way of example.
Fig. 19 is a diagram illustrating the scheduled CDFG file 192 according to the third embodiment by way of example.
Fig. 20 is a functional structure diagram of the circuit design device 100 according to a fourth embodiment.
Fig. 21 is a flowchart illustrating a flow of circuit design processing of the circuit design device 100 according to the fourth embodiment.
Fig. 22 is an outline diagram of an error countermeasure insertion processing of an error countermeasure insertion unit 122 according to each embodiment.
Fig. 23 is a functional structure diagram of the circuit design device 100 according to a fifth embodiment.
Fig. 24 is a flowchart illustrating a flow of circuit design processing of the circuit design device 100 according to the fifth embodiment.
Fig. 25 is a flowchart illustrating a flow of circuit design processing of the circuit design device 100 according to the fifth embodiment.
Fig. 26 is a diagram illustrating another example of functional structure of the circuit design device 100 according to the fifth embodiment.
Fig. 27 is a flowchart illustrating another example of circuit design processing of the circuit design device 100 according to the fifth embodiment.
Fig. 28 is a flowchart illustrating another example of circuit design processing of the circuit design device 100 according to the fifth embodiment.
Fig. 29 is a flowchart illustrating another example of circuit design processing of the circuit design device 100 according to the fifth embodiment.
Fig. 30 is a flowchart illustrating another example of circuit design processing of the circuit design device 100 according to the fifth embodiment.

### Description of Embodiments

### First Embodiment

An embodiment for designing an integrated circuit including an error countermeasure circuit and operating at a desired operation frequency will be described.

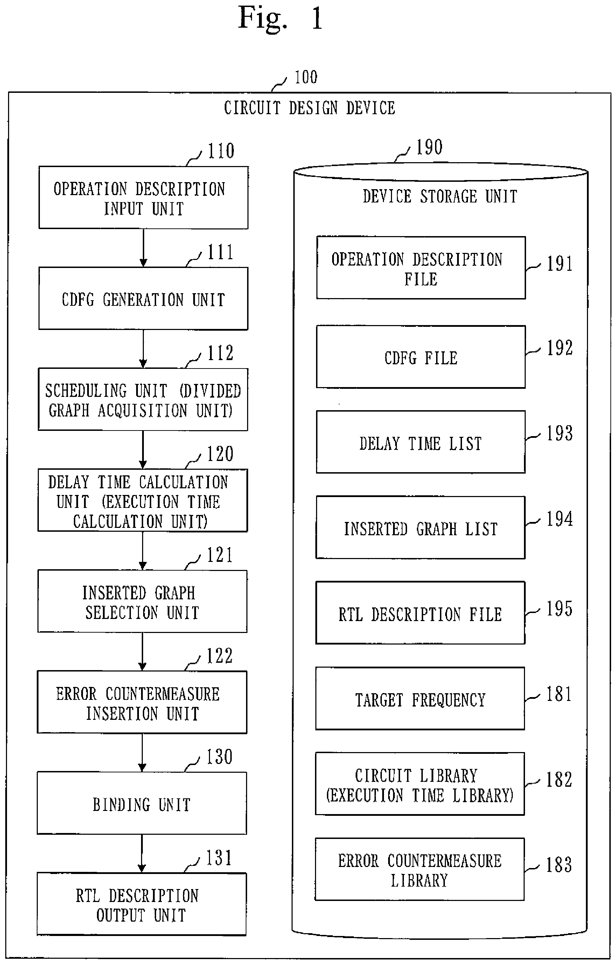

Fig. 1 is a functional structure diagram of a circuit design device 100 according to a first embodiment.

The functional structure of the circuit design device 100 according to the first embodiment will be described with reference to Fig. 1.

The circuit design device 100 is a device that performs high-level synthesis for obtaining an RTL description file 195 from an operation description file 191 of an integrated circuit.

The operation description file 191 is an electronic file denoting the operation description of the integrated circuit therein. The operation description denotes the operations of the integrated circuit in HDL (hardware description language). SystemC is an example of HDL and high-level language.

The RTL description file 195 is an electronic file denoting the RTL description of the integrated circuit therein. The RTL description denotes the operations of the integrated circuit in RTL (register transfer level).

The circuit design device 100 includes an operation description input unit 110, a CDFG generation unit 111, and a scheduling unit 112 (an example of divided graph acquisition unit).

The circuit design device 100 includes a delay time calculation unit 120 (an example of execution time calculation unit), an inserted graph selection unit 121, and an error countermeasure insertion unit 122.

The circuit design device 100 includes a binding unit 130, an RTL description output unit 131, and a device storage unit 190.

The operation description input unit 110 acquires the operation description file 191.

The CDFG generation unit 111 converts the operation description described in the operation description file 191 into CDFG (control data flow graph) thereby to generate a CDFG file 192.

The CDFG file 192 is an electronic file denoting the CDFG of the integrated circuit therein. The CDFG is a graph denoting a control data flow indicating a control flow of the integrated circuit and a data flow of the integrated circuit.

The scheduling unit 112 determines an execution order of each computation step included in the control data flow indicated by the CDFG based on the CDFG described in the CDFG file 192.

The scheduling unit 112 then divides the CDFG described in the CDFG file 192 into a plurality of graphs.

In the following, each graph acquired by dividing the CDFG by the scheduling unit 112 will be denoted as computation path graph (an example of divided graph) and a control data flow indicated by a computation path graph will be denoted as computation path (an example of division flow).

Further, the CDFG file 192 processed by the scheduling unit 112 will be denoted as scheduled CDFG file 192.

The scheduled CDFG file 192 includes information on execution order of each computation step, identifier of each computation path, range of each computation path, and the like.

The delay time calculation unit 120 calculates an execution time required to execute a computation path (which will be denoted as delay time below) when an error countermeasure step is inserted into the computation path indicated by a computation path graph per computation path graph described in the scheduled CDFG file 192.

A delay time calculated by the delay time calculation unit 120 will be denoted as counter-error delay time.

The delay time calculation unit 120 generates a delay time list 193 indicating a counter-error delay time of each computation path.

The inserted graph selection unit 121 selects a computation path graph of a computation path for which the delay time does not exceed a target time from among a plurality of computation path graphs described in the scheduled CDFG file 192 based on the delay time list 193. The target time is calculated by dividing unit time by target frequency 181.

A computation path graph selected by the inserted graph selection unit 121 will be denoted as inserted graph, and a computation path indicated by an inserted graph will be denoted as insertion path.

The inserted graph selection unit 121 generates an inserted graph list 194 indicating an identifier of each selected inserted graph.

The error countermeasure insertion unit 122 inserts an error countermeasure notation into each inserted graph based on the inserted graph list 194. The error countermeasure notation indicates an error countermeasure circuit for performing the error countermeasure step.

The scheduled CDFG file 192 processed by the error countermeasure insertion unit 122 will be denoted as counter-error CDFG file 192.

The binding unit 130 assigns hardware such as arithmetic circuit, flip-flop (FF) and error countermeasure circuit to each step included in the CDFG described in the counter-error CDFG file 192.

The counter-error CDFG file 192 processed by the binding unit 130 will be denoted as bound CDFG file 192 below. The bound CDFG file 192 includes information on hardware assigned to each step.

The RTL description output unit 131 converts the CDFG described in the bound CDFG file 192 into RTL description thereby to generate the RTL description file 195.

The device storage unit 190 stores data used, generated or input/output by the circuit design device 100.

For example, the device storage unit 190 stores the operation description file 191, the CDFG file 192, the delay time list 193, the inserted graph list 194, and the RTL description file 195 therein. The device storage unit 190 further stores the target frequency 181, a circuit library 182 (an example of execution time library), and an error countermeasure library 183.

The target frequency 181 is a target value of the operation frequency of the integrated circuit. A target time may be stored instead of the target frequency 181.

The circuit library 182 is an electronic file including a delay time per computation step.

The error countermeasure library 183 is an electronic file including a delay time per error countermeasure circuit (step).

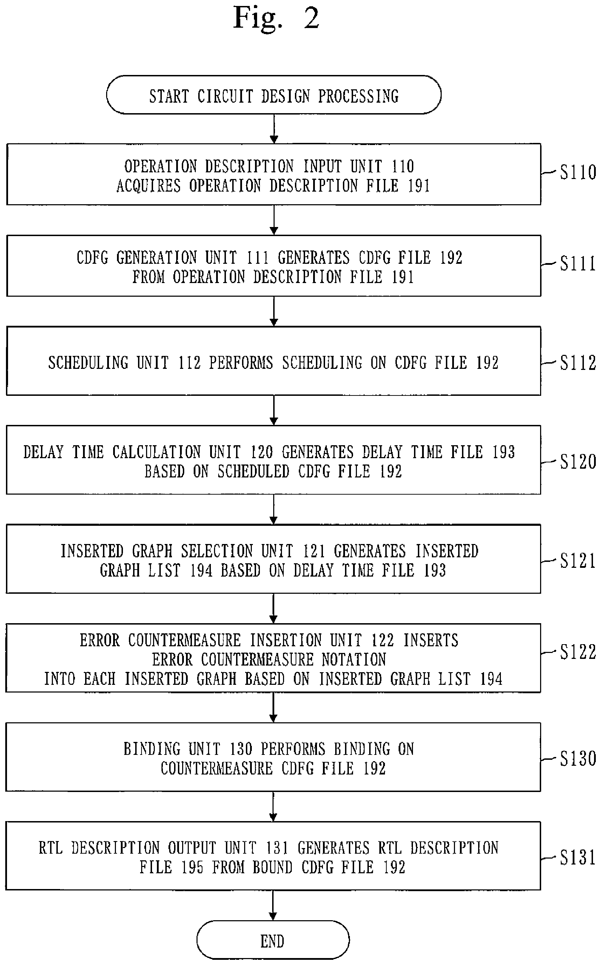

Fig. 2 is a flowchart illustrating a flow of circuit design processing of the circuit design device 100 according to the first embodiment.

The circuit design processing of the circuit design device 100 according to the first embodiment will be described with reference to Fig. 2.

In S 110, a designer of the integrated circuit inputs the operation description file 191 denoting the operation description of the integrated circuit therein into the circuit design device 100.

The operation description input unit 110 acquires the input operation description file 191.

The processing proceeds to S111 after S110.

In S111, the CDFG generation unit 111 converts the operation description of the integrated circuit described in the operation description file 191 into CDFG thereby to generate the CDFG file 192 denoting the CDFG therein.

The CDFG includes CFG (control flow graph) and DFG (data flow graph).

The CFG illustrates the processing branches such as if or while.

The DFG illustrates a flow of data.

The method for converting the operation description into CDFG may be the same method as performed in typical high-level synthesis.

The processing proceeds to S 112 after S111.

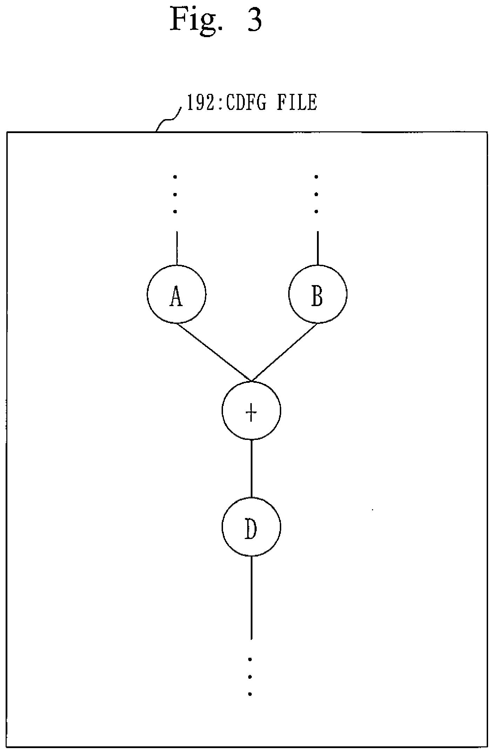

Fig. 3 is a diagram illustrating the CDFG file 192 according to the first embodiment by way of example.

The CDFG file 192 according to the first embodiment will be described by way of example with reference to Fig. 3. In Fig. 3, DFG is extracted from the CDFG indicated by the CDFG file 192. This is applicable to the following diagrams illustrating the CDFG file 192.

The CDFG described in the CDFG file 192 includes the computation step of adding the value of a variable B to the value of a variable A. The value acquired by the addition is set as a variable D.

The computation step includes the notations of the variable A, the variable B, the addition, and the variable D.

Retuning to Fig. 2, the description will be continued from S 112.

In S 112, the scheduling unit 112 performs the following scheduling on the CDFG file 192 based on the target frequency 181 and the circuit library 182.

The scheduling unit 112 determines an execution order of each computation step included in the control data flow indicated by the CDFG based on the CDFG described in the CDFG file 192.

The scheduling unit 112 then divides the CDFG described in the CDFG file 192 into a plurality of computation path graphs. For example, the CDFG is divided before (or after) each operator.

A delay time of each computation path is a target time or less. The target time is calculated by dividing unit time (one second, for example) by the target frequency 181. Further, a delay time of each computation step included in the CDFG is indicated in the circuit library 182.

A flip-flop is inserted between two computation paths arranged in series.

The scheduling method (determining an execution order and dividing CDFG) may be the same method as performed in typical high-level synthesis.

The processing proceeds to S120 after S112.

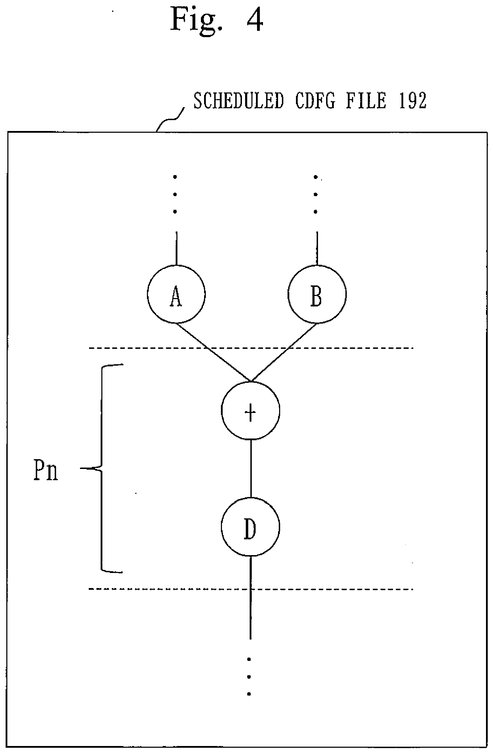

Fig. 4 is a diagram illustrating the scheduled CDFG file 192 according to the first embodiment by way of example.

The scheduled CDFG file 192 according to the first embodiment will be described by way of example with reference to Fig. 4.

The scheduled CDFG file 192 includes a computation path identifier for identifying each computation path graph acquired by dividing the CDFG, and range information on a range of each computation path graph (in chained lines). A series of computation steps indicated between the two chained lines in the Figure is a computation path Pn. A flip-flop is inserted in the portion indicated by a chained line in the Figure.

The computation path Pn is a computation step in which a value obtained by adding the value of the variable B to the value of the variable A is set for the variable D. The flip-flops are inserted before and after the computation path Pn.

Returning to Fig. 2, the description will be continued from S120.

In S120, the delay time calculation unit 120 generates the delay time list 193 as follows based on the circuit library 182, the error countermeasure library 183, and the scheduled CDFG file 192.

The delay time calculation unit 120 calculates a counter-error delay time of a computation path per computation path graph described in the scheduled CDFG file 192.

The delay time calculation unit 120 generates the delay time list 193 indicating a counter-error delay time of each computation path.

The delay time of each computation step included in the CDFG is indicated in the circuit library 182. The delay time of the error countermeasure step is indicated in the error countermeasure library 183.

The designer may designate a type of the error countermeasure step (such as duplex, triple, or majority) for the circuit design device 100.

In this case, the error countermeasure library 183 indicates a delay time of the error countermeasure step per type of the error countermeasure step. The delay time calculation unit 120 then acquires a delay time of the error countermeasure step of a type designated by the designer from the error countermeasure library 183, and calculates a counter-error delay time by use of the acquired delay time.

The processing proceeds to S 121 after S120.

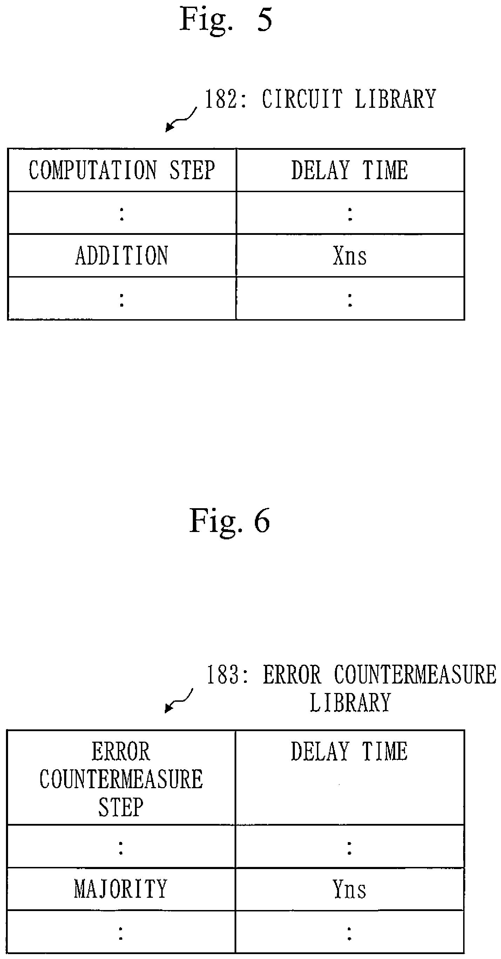

Fig. 5 is a diagram illustrating the circuit library 182 according to the first embodiment by way of example.

The circuit library 182 according to the first embodiment will be described by way of example with reference to Fig. 5.

The circuit library 182 includes a computation identifier for identifying a type of the computation step and a delay time of the computation step per type of the computation step.

For example, the circuit library 182 includes a delay time (Xns) of the addition step.

Fig. 6 is a diagram illustrating the error countermeasure library 183 according to the first embodiment by way of example.

The error countermeasure library 183 according to the first embodiment will be described by way of example with reference to Fig. 6.

The error countermeasure library 183 includes an error countermeasure identifier for identifying a type of the error countermeasure step and a delay time of the error countermeasure step per type of the error countermeasure step.

For example, the error countermeasure library 183 includes a delay time (Yns) of the majority step.

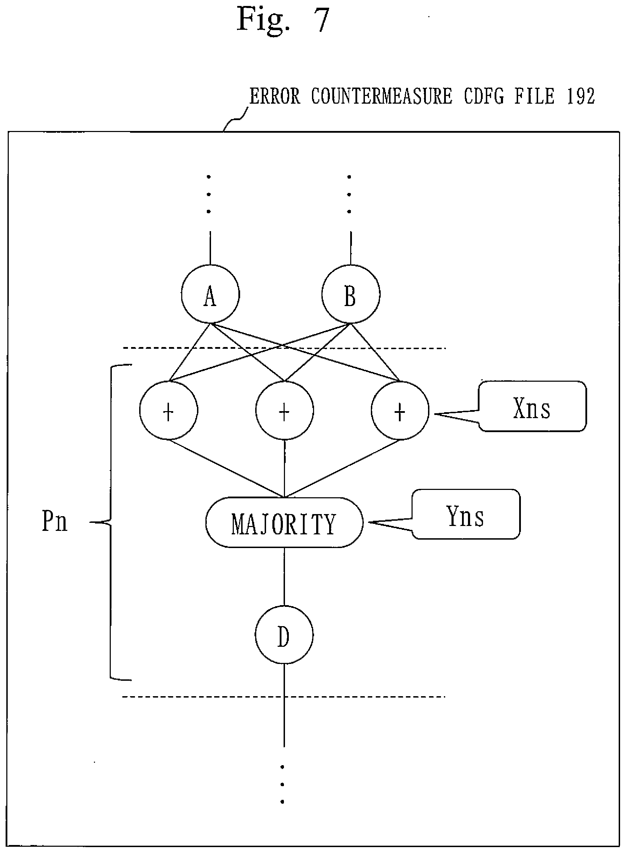

Fig. 7 is a diagram illustrating the counter-error CDFG file 192 according to the first embodiment by way of example.

The counter-error CDFG file 192 according to the first embodiment will be described by way of example with reference to Fig. 7.

The CDFG file 192 indicates a computation path Pn into which the notation of the majority step is inserted.

The majority step is a step of selecting one computation result by majority when a plurality of different computation results are acquired. The majority step is an example of error countermeasure step.

Assuming that two computation results are N and one computation result is N', N is selected in the majority step.

The computation path Pn includes the addition step and the majority step.

Assuming that the delay time of the addition step is Xns and the delay time of the majority step is Yns, the counter-error delay time of the computation path Pn is Xns + Yns.

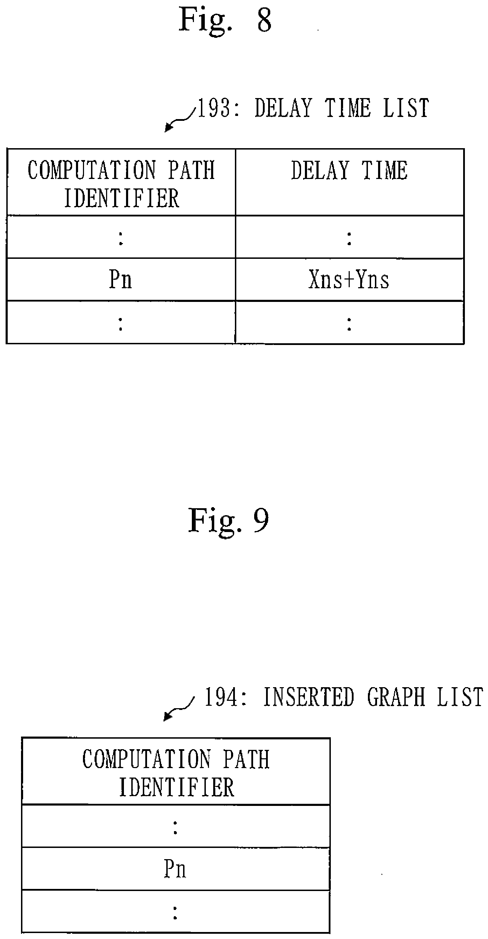

Fig. 8 is a diagram illustrating the delay time list 193 according to the first embodiment by way of example.

The delay time list 193 according to the first embodiment will be described by way of example with reference to Fig. 8.

The delay time list 193 includes a computation path identifier for identifying a computation path graph and a counter-error delay time of the computation path per computation path graph.

For example, the delay time list 193 includes the delay time (Xns + Yns) of the computation path Pn.

Returning to Fig. 2, the description will be continued from S121.

In S121, the inserted graph selection unit 121 generates the inserted graph list 194 as follows based on the target frequency 181 and the delay time list 193.

The inserted graph selection unit 121 calculates a target time acquired by dividing unit time by the target frequency 181.

The inserted graph selection unit 121 selects a computation path identifier associated with a delay time at the target time or less from among the computation path identifiers included in the delay time list 193. The computation path graph identified by the selected computation path identifier is an inserted path graph.

The inserted graph selection unit 121 generates the inserted graph list 194 indicating each selected computation path identifier.

The processing proceeds to S122 after S121.

Fig. 9 is a diagram illustrating the inserted graph list 194 according to the first embodiment by way of example.

The inserted graph list 194 according to the first embodiment will be described by way of example with reference to Fig. 9.

The inserted graph list 194 includes the computation path identifier of each inserted path graph.

For example, the computation path graph Pn is an inserted path graph.

Returning to Fig. 2, the description will be continued from S122.

In S122, the error countermeasure insertion unit 122 selects an inserted path graph identified by a computation path identifier from the scheduled CDFG file 192 per computation path identifier included in the inserted graph list 194.

The error countermeasure insertion unit 122 then inserts an error countermeasure notation into each selected inserted path graph.

The processing proceeds to S130 after S122.

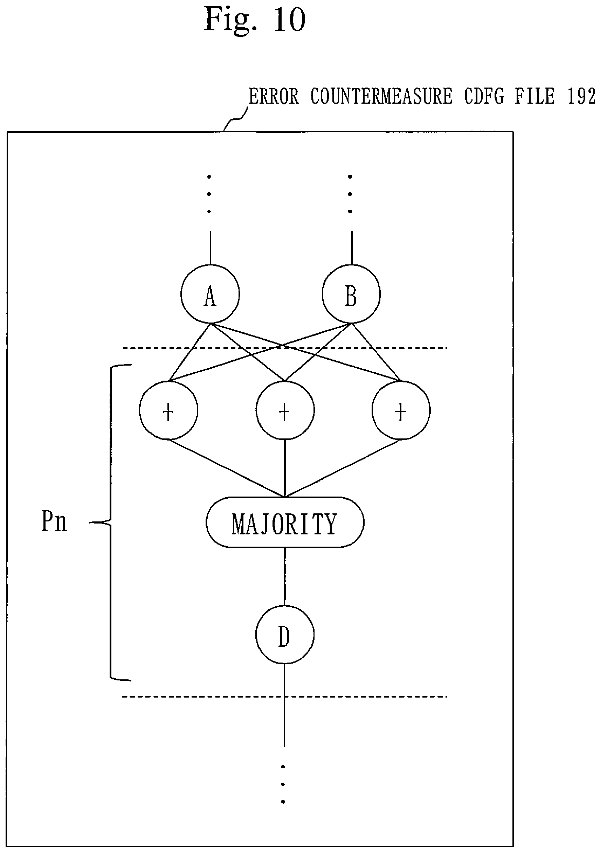

Fig. 10 is a diagram illustrating the counter-error CDFG file 192 according to the first embodiment by way of example.

For example, the error countermeasure insertion unit 122 multiplexes the addition notation included in the inserted path graph Pn in the scheduled CDFG file 192 (Fig. 4) to be triple. The error countermeasure insertion unit 122 then inserts the notation of the majority step connected to the three addition notations thereby to generate the CDFG file 192 as illustrated in Fig. 10.

Returning to Fig. 2, the description will be continued from S130.

In S130, the binding unit 130 assigns hardware such as arithmetic circuit, flip-flop, and error countermeasure circuit to each step included in the CDFG described in the counter-error CDFG file 192.

The bound CDFG file 192 includes information on hardware assigned to each step.

The binding (hardware assignment) method may be the same method as performed in typical high-level synthesis.

The processing proceeds to S 131 after S130.

In S 131, the RTL description output unit 131 converts the CDFG described in the bound CDFG file 192 into RTL description thereby to generate the RTL description file 195 denoting the RTL description therein.

The method for converting CDFG into RTL description may be the same method as performed in typical high-level synthesis.

The circuit design processing is terminated after S 131.

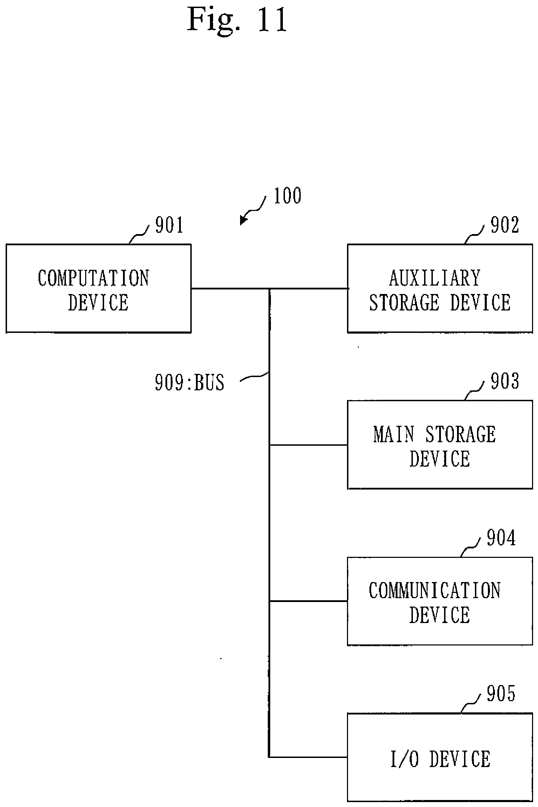

Fig. 11 is a diagram illustrating an example of hardware structure of the circuit design device 100 according to the first embodiment.

The hardware structure of the circuit design device 100 according to the first embodiment will be described by way of example with reference to Fig. 11. The hardware structure of the circuit design device 100 maybe different from the structure illustrated in Fig. 11.

The circuit design device 100 is a computer including a computation device 901, an auxiliary storage device 902, a main storage device 903, a communication device 904, and an I/O device 905.

The computation device 901, the auxiliary storage device 902, the main storage device 903, the communication device 904, and the I/O device 905 are connected to a bus 909.

The computation device 901 is CPU (Central Processing Unit) for executing a program

The auxiliary storage device 902 is ROM (Read Only Memory), flash memory, or hard disk device, for example.

The main storage device 903 is RAM (Random Access Memory), for example.

The communication device 904 makes communication via Internet, LAN (Local Area Network), telephone line network, or other networks in a wired or wireless manner.

The I/O device 905 is mouse, keyboard, or display device, for example.

A program, which is typically stored in the auxiliary storage device 902, is loaded into the main storage device 903, read by the computation device 901, and executed by the computation device 901.

For example, the operating system (OS) is stored in the auxiliary storage device 902. Further, Programs for realizing the functions each described as a "unit" is stored in the auxiliary storage device 902. Then, the OS and the programs for realizing the functions each described as the "unit" are loaded into the main storage device 903 and are executed by the computation device 901. The "unit" may be replaced with "processing," "step," "program," or "device."

Information, data, files, signal values or variable values indicating results of processing such as "determination," "judgement," "extraction," "detection," "setting," "registration," "selection", "generation," "input," "output," and the like are stored in the main storage device 903 or the auxiliary storage device 902.

According to the first embodiment, an error countermeasure notation can be inserted into CDFG such that a delay time does not exceed the target time.

By use of the CDFG, it is possible to design an integrated circuit including the error countermeasure circuit and operating at the target frequency 181.

### Second Embodiment

An embodiment for inserting an error countermeasure notation up to the target inserted amount will be described.

The different points from the first embodiment will be mainly described below. The points, which are not described, are the same as in the first embodiment.

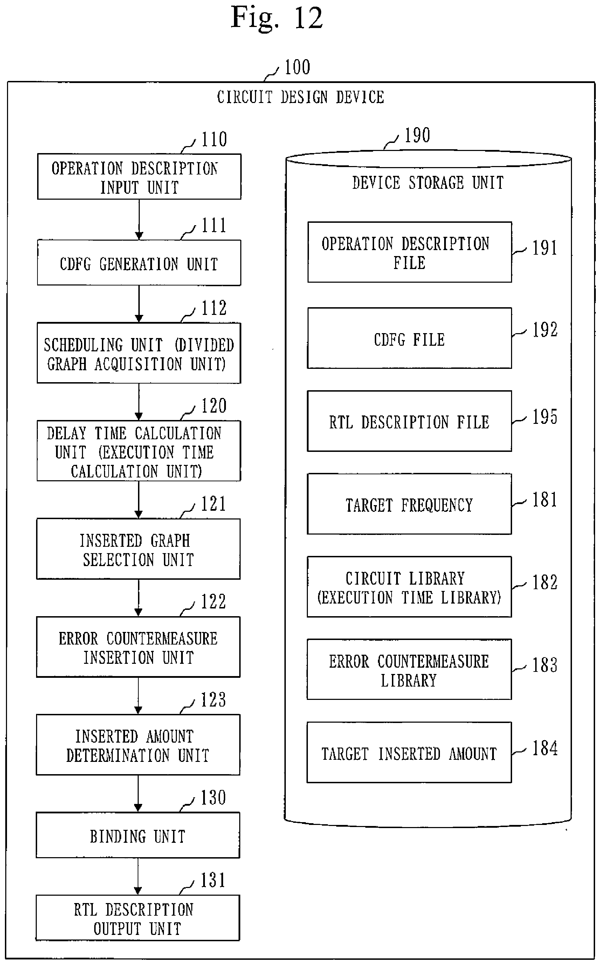

Fig. 12 is a functional structure diagram of the circuit design device 100 according to a second embodiment.

The functional structure of the circuit design device 100 according to the second embodiment will be described with reference to Fig. 12.

The circuit design device 100 includes an inserted amount determination unit 123 in addition to the functions according to the first embodiment (see Fig. 1).

The inserted amount determination unit 123 determines whether the amount of inserted error countermeasure notations reaches the target inserted amount 184 based on the number of inserted graphs inserting an error countermeasure notation therein.

For example, the target inserted amount 184 is a rate of the number of inserted graphs relative to the total number of computation path graphs (which will be denoted as insertion rate). The number of inserted graphs is the number of inserted graphs inserting an error countermeasure notation therein.

The target inserted amount 184 may be other than the insertion rate. For example, the target inserted amount 184 may be the number of inserted graphs inserting an error countermeasure notation therein.

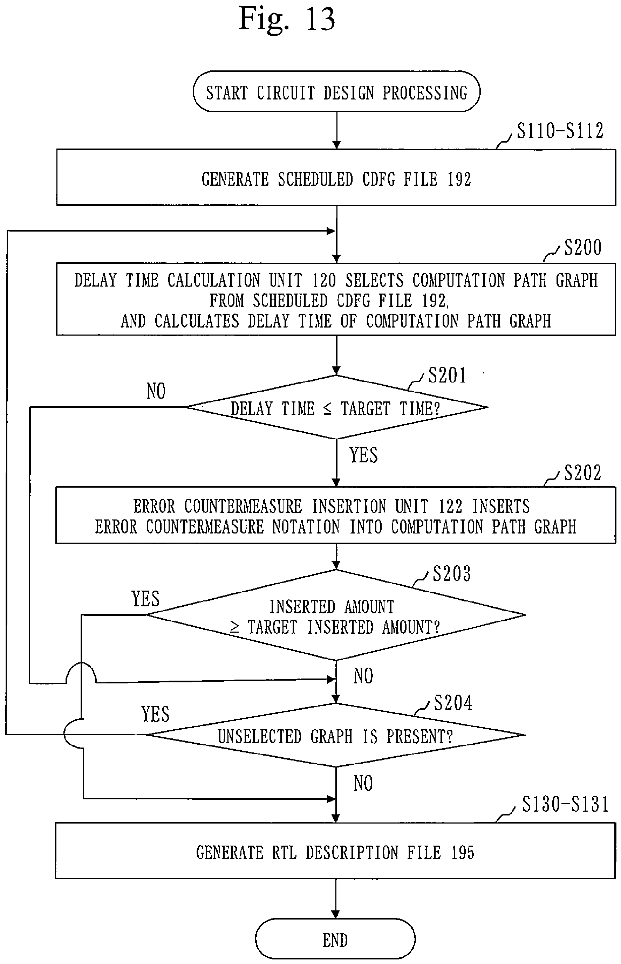

Fig. 13 is a flowchart illustrating a flow of circuit design processing of the circuit design device 100 according to the second embodiment.

The circuit design processing of the circuit design device 100 according to the second embodiment will be described with reference to Fig. 13.

In S110, the operation description input unit 110 acquires the operation description file 191.

In S111, the CDFG generation unit 111 generates the CDFG file 192 from the operation description file 191.

In S12, the scheduling unit 112 performs scheduling on the CDFG file 192.

S110 to S 112 are the same as in the first embodiment (see Fig. 2).

The processing proceeds to S200 after S112.

In S200, the delay time calculation unit 120 selects one unselected computation path graph from the scheduled CDFG file 192.

The delay time calculation unit 120 then calculates a delay time of the selected computation path graph. The delay time calculation method is the same as in the first embodiment (see S120 in Fig. 2).

The processing proceeds to S201 after S200.

In S201, the inserted graph selection unit 121 compares the delay time calculated in S200 with the target time.

When the delay time is the target time or less (YES), the processing proceeds to S202.

When the delay time is longer than the target time (NO), the processing proceeds to S204.

In S202, the error countermeasure insertion unit 122 inserts an error countermeasure notation into the computation path graph (inserted path graph) selected in S200.

The processing proceeds to S203 after S202.

In S203, the inserted amount determination unit 123 calculates the amount of inserted error countermeasure notations.

The inserted amount determination unit 123 then compares the amount of inserted error countermeasure notations with the target inserted amount 184.

When the amount of inserted error countermeasure notations is the target inserted amount 184 or more (YES), the processing proceeds to S130.

When the amount of inserted error countermeasure notations is less than the target inserted amount 184 (NO), the processing proceeds to S204.

In S204, the delay time calculation unit 120 determines whether a computation path graph not selected in S200 is present.

When an unselected computation path graph is present (YES), the processing returns to S200.

When an unselected computation path graph is not present (NO), the processing proceeds to S130. In this case, the inserted amount determination unit 123 may display a message that the amount of inserted error countermeasure notations does not reach the target inserted amount 184.

In S130, the binding unit 130 binds the counter-error CDFG file 192.

In S131, the RTL description output unit 131 generates the RTL description file 195 from the bound CDFG file 192.

S130 and S 131 are the same as in the first embodiment (see Fig. 2).

The circuit design processing is terminated after S131.

According to the second embodiment, an error countermeasure notation can be inserted up to the target inserted amount 184. Thereby, it is possible to prevent the error countermeasure notations from being inserted more than needed, to limit the number of error countermeasure circuits, and to prevent an increase in area of the integrated circuit.

### Third embodiment

An embodiment when the amount of inserted error countermeasure notations does not reach the target inserted amount 184 will be described.

The different points from the second embodiment will be mainly described below. The points, which are not described, are the same as in the second embodiment.

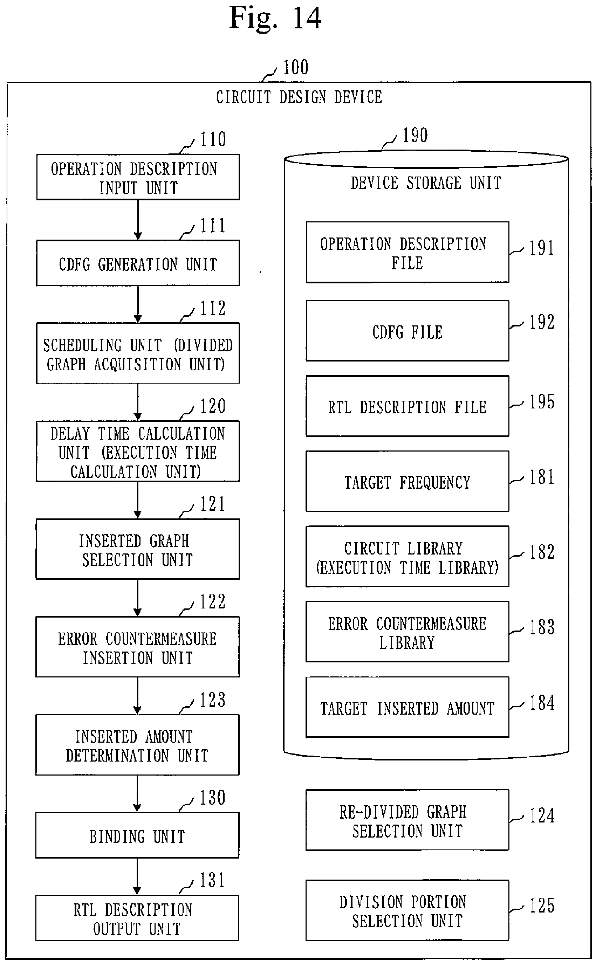

Fig. 14 is a functional structure diagram of the circuit design device 100 according to a third embodiment.

The functional structure of the circuit design device 100 according to the third embodiment will be described with reference to Fig. 14.

The circuit design device 100 includes a re-divided graph selection unit 124 and a division portion selection unit 125 in addition to the functions described according to the second embodiment (see Fig. 12).

When the amount of inserted error countermeasure notations does not reach the target inserted amount 184, the re-divided graph selection unit 124 selects a computation path graph not inserting an error countermeasure notation therein from the scheduled CDFG file 192. A computation path graph selected by the re-divided graph selection unit 124 will be denoted as re-divided graph.

The division portion selection unit 125 selects a division portion from a re-divided graph.

The scheduling unit 112 divides a re-divided graph based on a division portion. Each graph, which is acquired by dividing a re-divided graph, will be denoted as subdivided graph, and a computation path indicated by a subdivided graph will be denoted as subdivided path.

The delay time calculation unit 120 calculates a counter-error delay time of a subdivided path per subdivided graph.

The inserted graph selection unit 121 selects an inserted graph from a plurality of subdivided graphs. A subdivided graph selected as inserted graph will be denoted as inserted subdivided graph.

The error countermeasure insertion unit 122 inserts an error countermeasure notation into each inserted subdivided graph.

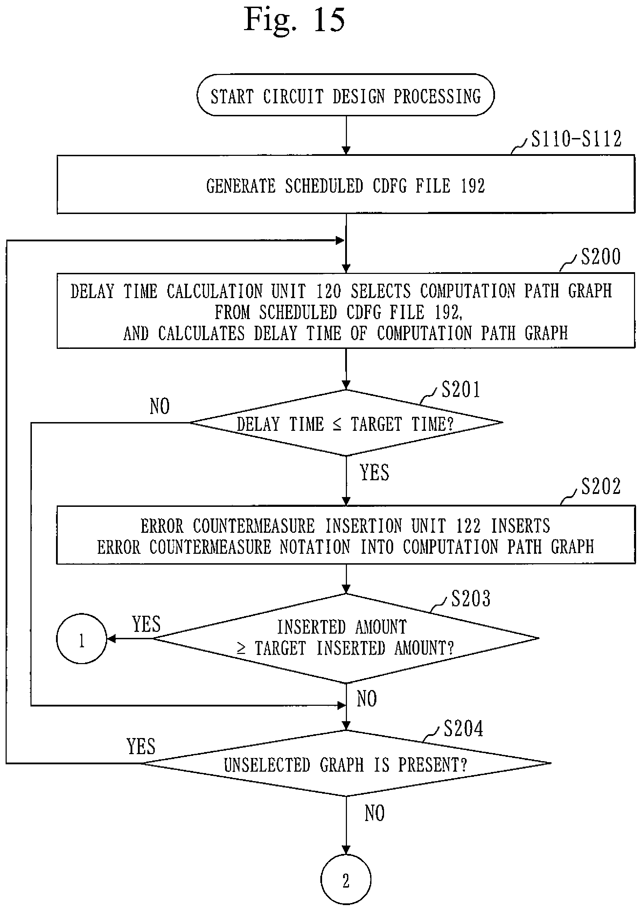

Fig. 15, Fig. 16, and Fig. 17 are the flowcharts illustrating a flow of circuit design processing of the circuit design device 100 according to the third embodiment.

The circuit design processing of the circuit design device 100 according to the third embodiment will be described with reference to Fig. 15 to Fig. 17.

S110 to S204 (see Fig. 15) are the same as in the second embodiment (see Fig. 13).

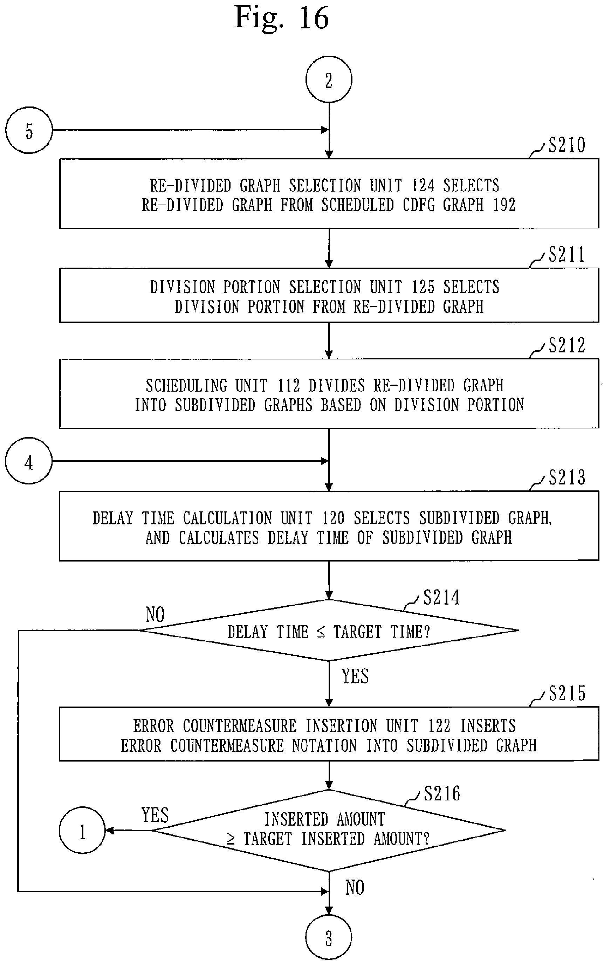

In S204, when an unselected computation path graph is not present (NO), the processing proceeds to S210 (see Fig. 16).

In S210 (see Fig. 16), the re-divided graph selection unit 124 selects an unselected re-divided graph from the scheduled CDFG file 192.

For example, the re-divided graph selection unit 124 selects a computation path graph including a plurality of operators (a series of operators) arranged in series as re-divided graph from each computation path graph not inserting an error countermeasure notation therein.

The processing proceeds to S211 after S210.

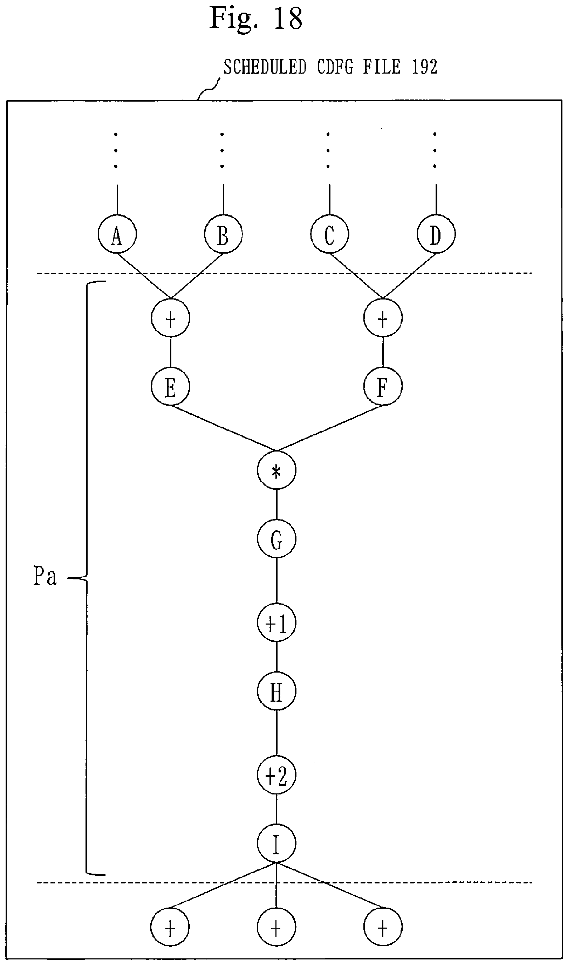

Fig. 18 is a diagram illustrating the scheduled CDFG file 192 according to the third embodiment by way of example,

For example, the re-divided graph selection unit 124 selects a computation path graph Pa as unselected re-divided graph from the CDFG file 192 (see Fig. 18).

The computation path graph Pa includes a plurality of operators (*, +1, +2) arranged in series.

Returning to Fig. 16, the description will be continued from S211.

In S211, the division portion selection unit 125 selects a division portion from the re-divided graph selected in S210.

For example, the division portion selection unit 125 selects a division portion as follows from the re-divided graph Pa (see Fig. 18).

The division portion selection unit 125 selects each operator (*, +1, +2) arranged in series as division portion.

The division portion selection unit 125 selects an operator (*) using more variables than other operators as division portion from among the plurality of operators (*, +1, +2) arranged in series. That is, the division portion selection unit 125 selects a portion with more computation paths (including subdivided paths) as division portion. With the selection method, insertion efficiency of error countermeasure circuits is increased against an increase in latency (total steps required for computation).

The division portion selection unit 125 selects an operator (+2) using more computation results than other operators as division portion from among the plurality of operators (*, +1, +2) arranged in series. That is, the division portion selection unit 125 selects a portion with more branches (fan-out) as division portion. With the selection method, an error countermeasure circuit is provided at a portion where a signal value is widely propagated, and thus the signal value of an error cannot be widely propagated.

The processing proceeds to S212 after S211.

In S212, the scheduling unit 112 divides the re-divided graph selected in S210 into a plurality of subdivided graphs based on the division portion selected in S211. A flip-flop is inserted between two subdivision paths arranged in series.

For example, the scheduling unit 112 divides the re-divided graph at each division portion immediately before (or after).

The processing proceeds to S213 after S212.

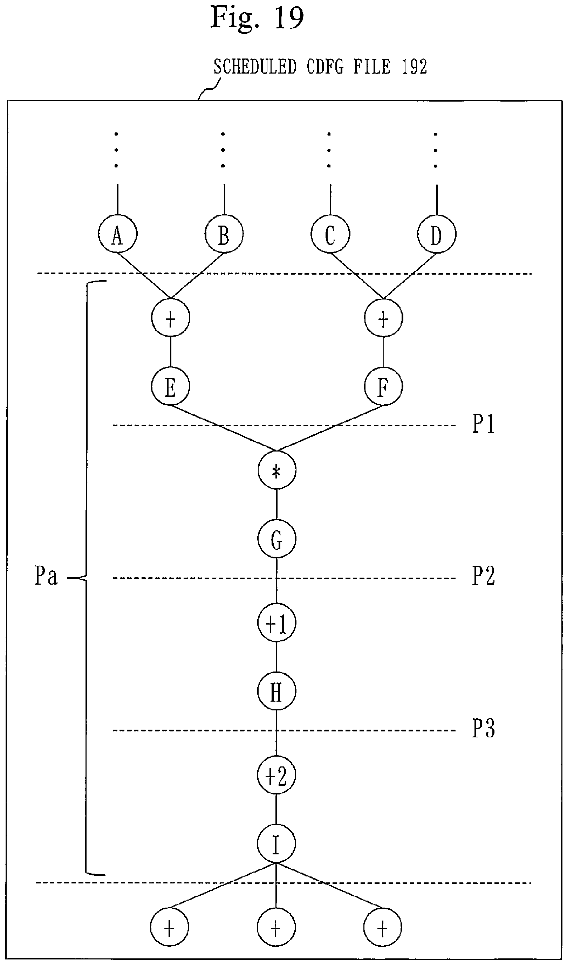

Fig. 19 is a diagram illustrating the scheduled CDFG file 192 according to the third embodiment by way of example.

For example, the scheduling unit 112 divides the re-divided graph Pa (see Fig. 19) as follows.

When the three operators (*, +1, +2) are selected as division portions, the scheduling unit 112 divides the re-divided graph Pa at the portion immediately before each operator (P1, P2, P3).

When the multiplication operator (*) is selected as division portion, the scheduling unit 112 divides the re-divided graph Pa at the portion (P1) immediately before the multiplication operator (*). When division is made at P1, the re-divided graph Pa is divided into three computation paths of A/B to E, C/D to F, and E/F to I. On the other hand, when division is made at P3, the re-divided graph Pa is branched into two computation paths of A/B/C/D to H and H to I. Therefore, the number of computation paths is larger for division at P1 than division at P3.

When the operator (+2) for adding 2 is selected as division portion, the scheduling unit 112 divides the re-divided graph Pa at the portion (P3) immediately before the operator (+2). When division is made at P3, the number of branches from a variable I behind P3 is three. On the other hand, when division is made at P1, the number of branches from a variable G behind P1 is 1. Therefore, the number of branches is larger for division at P3 than division at P1.

Returning to Fig. 16, the description will be continued from S213.

In S213, the delay time calculation unit 120 selects an unselected subdivided graph from the plurality of subdivided graphs acquired in S212.

The delay time calculation unit 120 then calculates a delay time of the selected subdivided graph. The delay time calculation method is the same as in the first embodiment (see S120 in Fig. 2).

The processing proceeds to S214 after S213.

In S214, the inserted graph selection unit 121 compares the delay time calculated in S213 with the target time.

When the delay time is the target time or less (YES), the processing proceeds to S215.

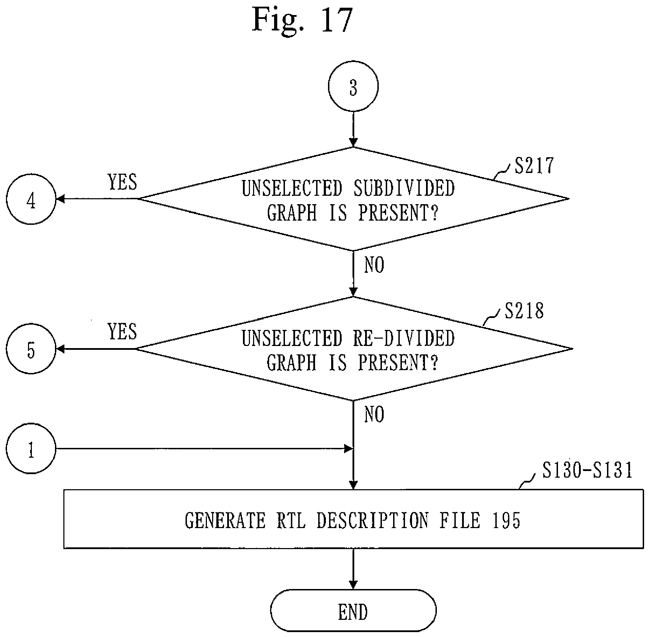

When the delay time is longer than the target time (NO), the processing proceeds to S217 (see Fig. 17).

In S215, the error countermeasure insertion unit 122 inserts an error countermeasure notation into the subdivided graph selected in S213.

The processing proceeds to S216 after S215.

In S216, the inserted amount determination unit 123 calculates the amount of inserted error countermeasure notations.

The inserted amount determination unit 123 then compares the amount of inserted error countermeasure notations with the target inserted amount 184.

When the amount of inserted error countermeasure notations is the target inserted amount 184 or more (YES), the processing proceeds to S 130 (see Fig. 17).

When the amount of inserted error countermeasure notations is less than the target inserted amount 184 (NO), the processing proceeds to S217 (see Fig. 17).

In S217 (see Fig. 17), the delay time calculation unit 120 determines whether a subdivided graph not selected in S213 is present.

When an unselected subdivided graph is present (YES), the processing returns to S213.

When an unselected subdivided graph is not present (NO), the processing proceeds to S218.

In S218, the re-divided graph selection unit 124 determines whether a re-divided graph not selected in S210 is present.

When an unselected re-divided graph is present (YES), the processing returns to S210.

When an unselected re-divided graph is not present (NO), the processing proceeds to S130. In this case, the inserted amount determination unit 123 may display a message that the amount of inserted error countermeasure notations does not reach the target inserted amount 184.

S130 and S131 are the same as in the second embodiment (see Fig. 13).

The circuit design processing is terminated after S131.

According to the third embodiment, an error countermeasure notation with the target inserted amount 184 can be inserted into the scheduled CDFG file 192 irrespective of the scheduled CDFG file 192.

### Fourth Embodiment

An embodiment for inserting an error countermeasure notation per group of computation paths, not per computation path, will be described.

The different points from the first embodiment will be mainly described below. The points, which are not described, are the same as in the first embodiment.

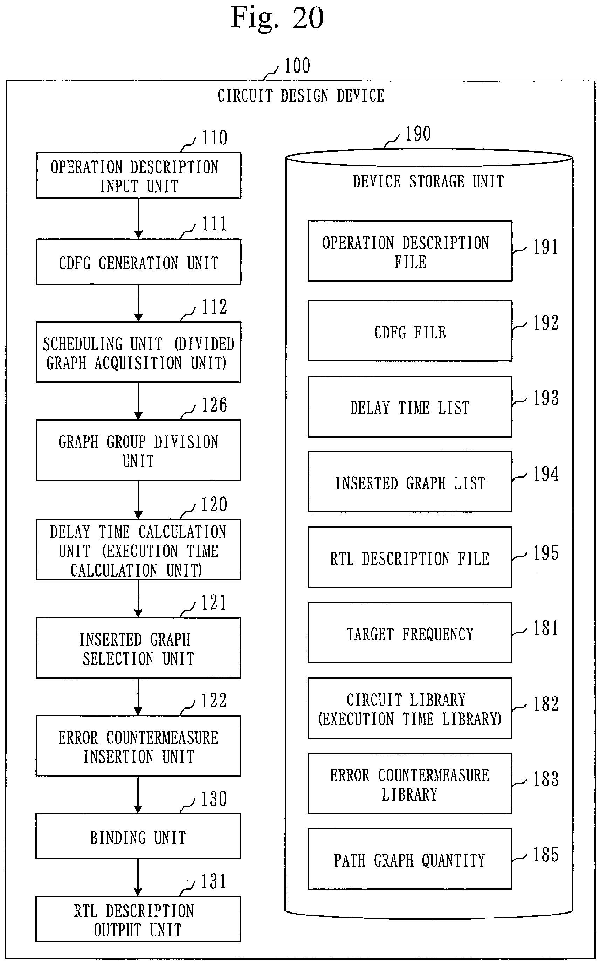

Fig. 20 is a functional structure diagram of the circuit design device 100 according to a fourth embodiment.

The functional structure of the circuit design device 100 according to the fourth embodiment will be described with reference to Fig. 20.

The circuit design device 100 includes a graph group division unit 126 in addition to the functions described according to the first embodiment (see Fig. 1).

The graph group division unit 126 divides a plurality of computation path graphs included in the CDFG indicated by the scheduled CDFG file 192 into a plurality of groups of path graphs. A group of path graphs is a plurality of consecutive computation path graphs (a series of computation path graphs).

The number of computation path graphs included in each group of path graphs will be denoted as path graph quantity 185.

The delay time calculation unit 120 calculates a delay time per final path graph in each group of path graphs.

The inserted graph selection unit 121 selects an inserted graph from the final path graph in each group of path graphs.

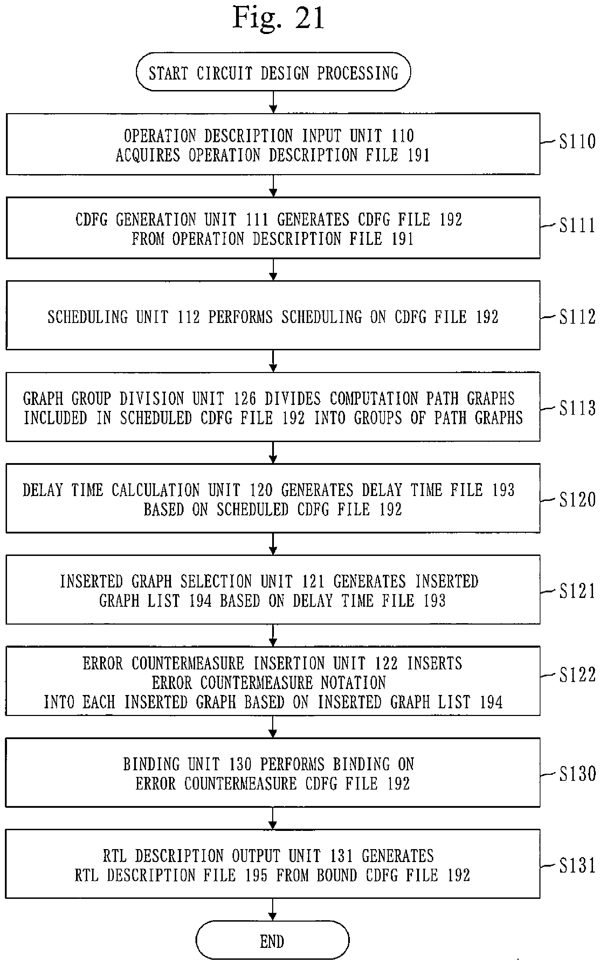

Fig. 21 is a flowchart illustrating a flow of circuit design processing of the circuit design device 100 according to the fourth embodiment.

The circuit design processing of the circuit design device 100 according to the fourth embodiment will be described with reference to Fig. 21.

The circuit design processing includes S113 in addition to the processing described in the first embodiment (see Fig. 2).

S110 to S 112 are the same as in the first embodiment.

The processing proceeds to S 113 after S 112.

In S113, the graph group division unit 126 divides a plurality of computation path graphs included in the scheduled CDFG file 192 into a plurality of groups of path graphs based on the path graph quantity 185.

The processing proceeds to S120 after S 113.

In S120, the delay time calculation unit 120 generates the delay time list 193 based on the scheduled CDFG file 192 (similarly as in the first embodiment).

The delay time calculation unit 120 calculates a delay time of the final computation path graph in each group of path graphs, not the delay times of all the computation path graphs. That is, the delay time list 193 indicates a delay time of the final computation path graph in each group of path graphs.

The processing proceeds to S121 after S120.

In S121, the inserted graph selection unit 121 generates the inserted graph list 194 based on the delay time list 193 (similarly as in the first embodiment).

The processing proceeds to S122 after S121.

In S122, the error countermeasure insertion unit 122 inserts an error countermeasure notation into each inserted graph based on the inserted graph list 194.

Further, the error countermeasure insertion unit 122 selects a group of path graphs including an inserted graph per inserted graph, and multiplexes a computation notation (such as operator) included in each computation path graph in each selected group of path graphs.

The processing proceeds to S130 after S122.

S130 and S 131 are the same as in the first embodiment.

The circuit design processing is terminated after S131.

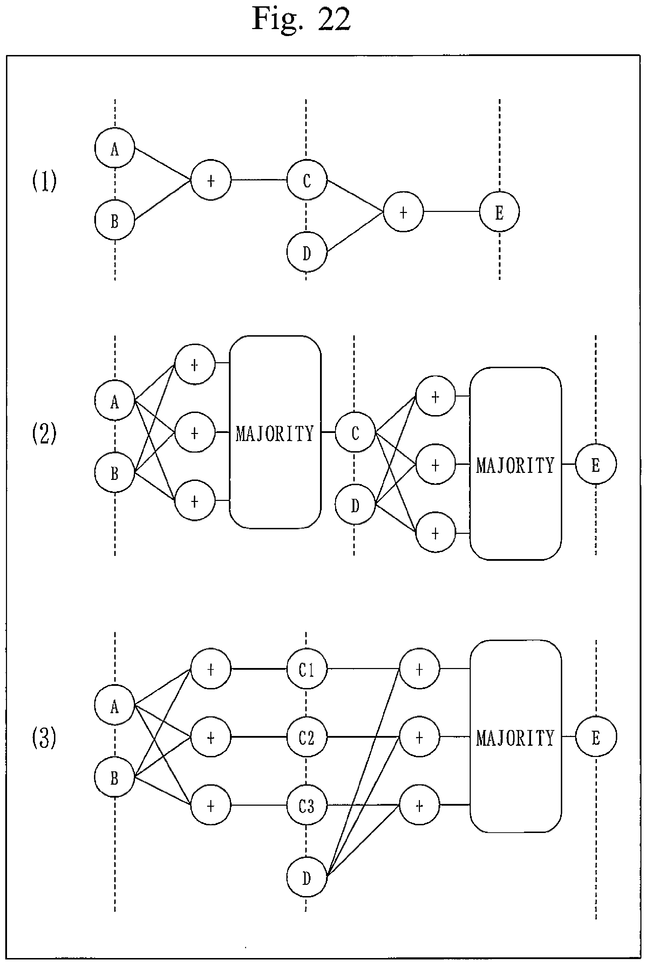

Fig. 22 is an outline diagram of the error countermeasure insertion processing by the error countermeasure insertion unit 122 according to each embodiment.

An outline of the error countermeasure insertion processing by the error countermeasure insertion unit 122 according to each embodiment will be described with reference to Fig. 22.
(1) of Fig. 22 is DFG before the error countermeasure circuit is inserted.

In (2) of Fig. 22, the error countermeasure insertion unit 122 inserts a majority circuit into both the first-half section and the second-half section. The error countermeasure insertion unit 122 further multiplexes an operator of each section.

In (3) of Fig. 22, it is assumed that a delay in the first-half section in which the delay of the adder and the delay of the majority circuit are summed is larger than the target delay. In this case, the error countermeasure insertion unit 122 cannot insert the majority circuit into the first-half section. Thus, the error countermeasure insertion unit 122 multiplexes an operator of the first-half section without inserting the majority circuit into the first-half section. The error countermeasure insertion unit 122 then inserts the majority circuit into the second-half section thereby to multiplex an operator of the second-half section. Thereby, even when the majority circuit cannot be inserted into the first-half section, a countermeasure against errors is enabled.

### Fifth Embodiment

An embodiment for inserting an error countermeasure notation per group of computation paths not per computation path will be described.

The different points from the second and third embodiments will be mainly described below. The points, which are not described, are the same as in the second and third embodiments.

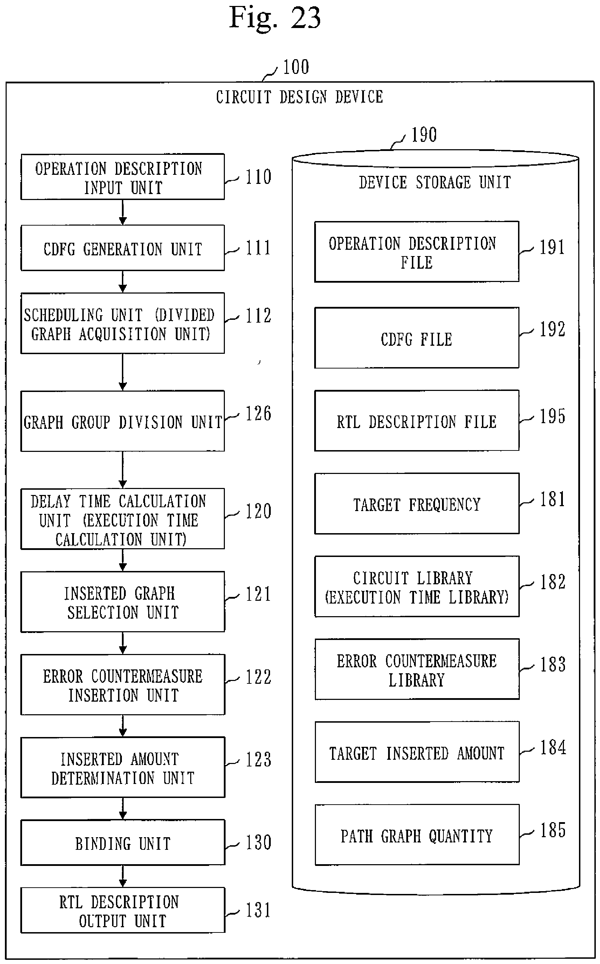

Fig. 23 is a functional structure diagram of the circuit design device 100 according to a fifth embodiment.

The functional structure of the circuit design device 100 according to the fifth embodiment will be described with reference to Fig. 23.

The circuit design device 100 includes the graph group division unit 126 in addition to the functions described in the second embodiment (see Fig. 12).

The function of the graph group division unit 126 is the same as in the fourth embodiment (see Fig. 20).

The functions of the delay time calculation unit 120, the inserted graph selection unit 121, and the error countermeasure insertion units 122 are the same as in the fourth embodiment.

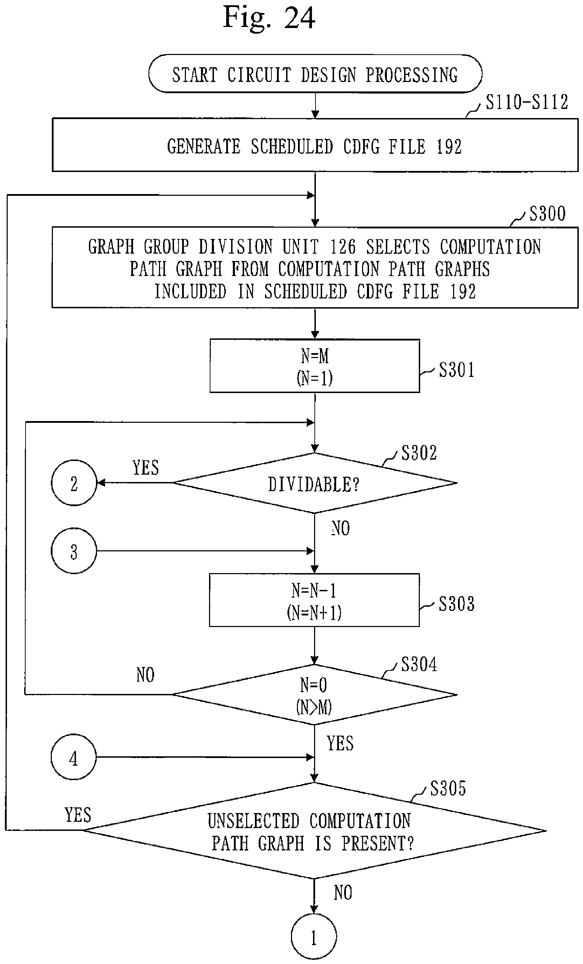

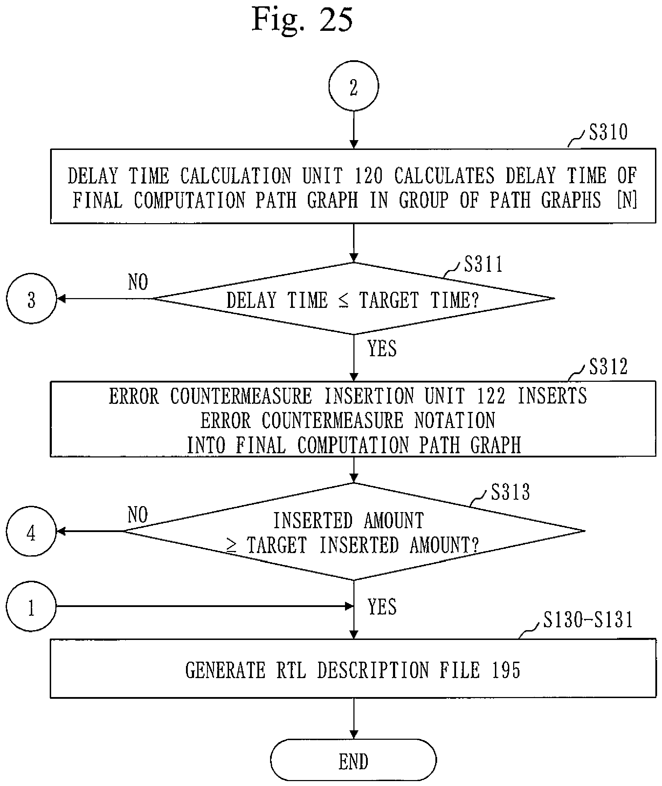

Fig. 24 and Fig. 25 are the flowcharts illustrating a flow of circuit design processing of the circuit design device 100 according to the fifth embodiment.

The circuit design processing of the circuit design device 100 according to the fifth embodiment will be described with reference to Fig. 24 and Fig. 25.

S110 to S112 (see Fig. 24) are the same as in the second embodiment (see Fig. 13).

The processing proceeds to S300 after S112.

In S300, the graph group division unit 126 selects an unselected computation path graph not inserting an error countermeasure notation therein from the plurality of computation path graphs included in the scheduled CDFG file 192.

The processing proceeds to S301 after S300.

In S301, the graph group division unit 126 sets an initial value M for a variable N. The initial value M is the path graph quantity 185.

The processing proceeds to S302 after S301.

In S302, the graph group division unit 126 determines whether a computation path graph inserting an error countermeasure notation therein is included in N computation path graphs consecutive from the computation path graph selected in S300. N consecutive computation path graphs will be denoted as a group of path graphs [N] below. A group of path graphs [N] not including a computation path graph inserting an error countermeasure notation therein can be divided from the CDFG

When the group of path graphs [N] can be divided from the CDFG (YES), the processing proceeds to S310 (see Fig. 25).

When the group of path graphs [N] cannot be divided from the CDFG (NO), the processing proceeds to S303.

In S303, the graph group division unit 126 subtracts 1 from the value of the variable N.

The processing proceeds to S304 after S303.

In S304, the graph group division unit 126 determines whether the value of the variable N is 0.

When the value of the variable N is 0 (YES), the processing proceeds to S305.

When the value of the variable N is not 0 (NO), the processing returns to S302.

In S305, the graph group division unit 126 determines whether a computation path graph not selected in S300 is present.

When an unselected computation path graph is present (YES), the processing returns to S300.

When an unselected computation path graph is not present (NO), the processing proceeds to S130 (see Fig. 25).

In S310 (see Fig. 25), the delay time calculation unit 120 calculates a delay time of the final computation path graph included in the group of path graphs [N] determined in S302.

The processing proceeds to S311 after S310.

In S311, the inserted graph selection unit 121 compares the delay time calculated in S310 with the target time.

When the delay time is the target time or less (YES), the processing proceeds to S312.

When the delay time is longer than the target time (NO), the processing proceeds to S303 (see Fig. 24).

In S312, the error countermeasure insertion unit 122 inserts an error countermeasure notation into the final computation path graph included in the group of path graphs [N] determined in S302.

Further, the error countermeasure insertion unit 122 multiplexes an operator included in each computation path graph in the group of path graphs [N].

The processing proceeds to S313 after S312.

In S313, the inserted amount determination unit 123 calculates the amount of inserted error countermeasure notations, and compares the amount of inserted error countermeasure notations with the target inserted amount 184.

When the amount of inserted error countermeasure notations is the target inserted amount 184 or more (YES), the processing proceeds to S130.

When the amount of inserted error countermeasure notations is less than the target inserted amount 184 (NO), the processing proceeds to S305 (see Fig. 24).

S130 and S 131 are the same as in the second embodiment (see Fig. 13).

The circuit design processing is terminated after S131.

As described above, the graph group division unit 126 searches a computation path into which an error countermeasure notation can be inserted while subtracting the number of computation path graphs N included in the group of path graphs [N] from the number of path graphs M.

The graph group division unit 126 may search a computation path while increasing N. In this case, the graph group division unit 126 sets 1 in N as the initial value in S301. Further, the graph group division unit 126 adds 1 to N in S303, and determines whether N is higher than M in S304.

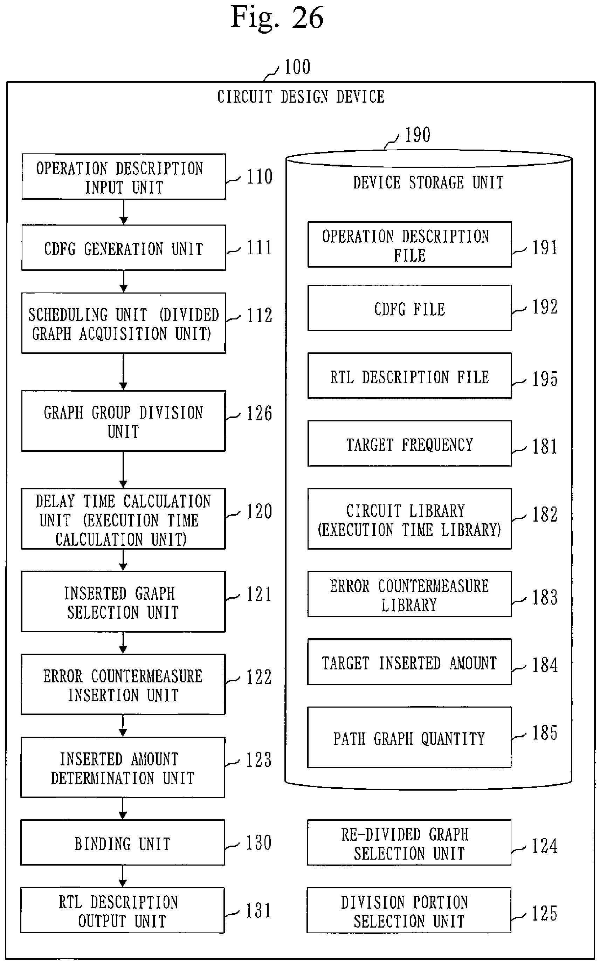

Fig. 26 is a diagram illustrating another example of functional structure of the circuit design device 100 according to the fifth embodiment.

Other example of functional structures of the circuit design device 100 according to the fifth embodiment will be described with reference to Fig. 26.

The circuit design device 100 includes the graph group division unit 126 in addition to the functions described in the third embodiment (see Fig. 14).

The function of the graph group division unit 126 is the same as in the fourth embodiment (see Fig. 20).

The functions of the delay time calculation unit 120, the inserted graph selection unit 121, and the error countermeasure insertion unit 122 are the same as in the fourth embodiment.

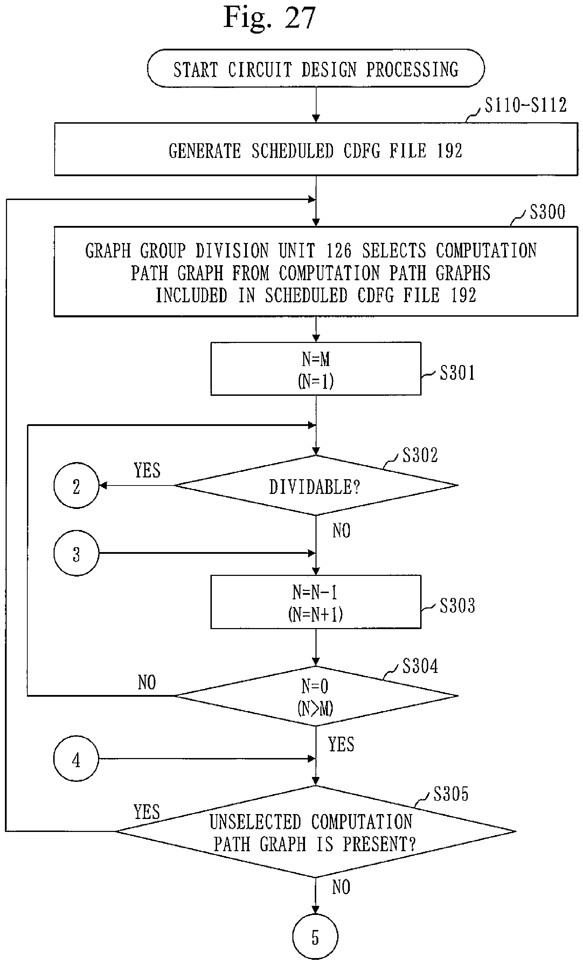

Fig. 27, Fig. 28, Fig. 29, and Fig. 30 are the flowcharts illustrating another example of circuit design processing of the circuit design device 100 according to the fifth embodiment.

A series of other example of circuit design processing of the circuit design device 100 according to the fifth embodiment will be described with reference to Fig. 27 to Fig. 30.

S110 to S305 (see Fig. 27) are the same as in Fig. 24.

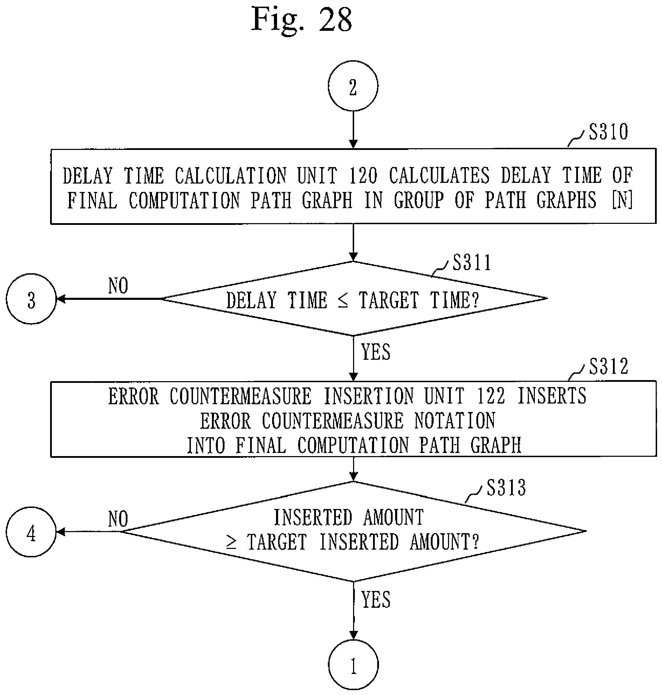

In S302, when the group of path graphs [N] can be divided from the CDFG (YES), the processing proceeds to S310 (see Fig. 28). S310 to S313 (see Fig. 28) are the same as in Fig. 25.

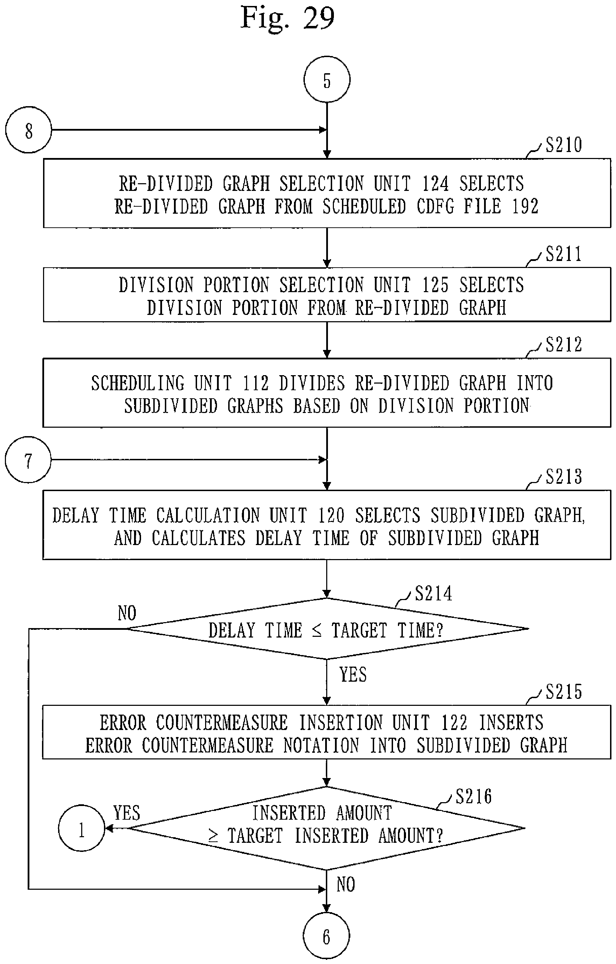

In S305, when an unselected computation path graph is not present (NO), the processing proceeds to S210 (see Fig. 29).

S210 to S216 (see Fig. 29) are the same as in Fig. 16.

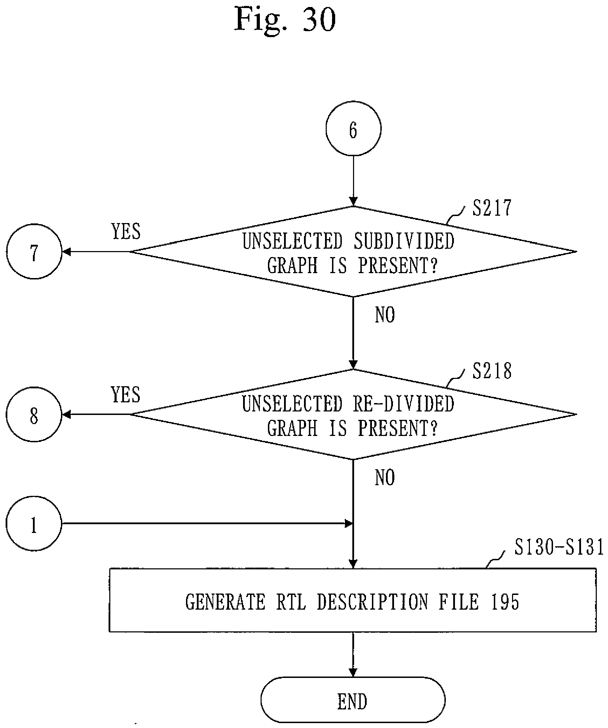

In S216, when the amount of inserted error countermeasure notations is less than the target inserted amount 184 (NO), the processing proceeds to S217 (see Fig. 30).

S217, S218, S130, and S131 (see Fig. 30) are the same as in Fig. 17.

The circuit design processing is terminated after S131.

As in Fig. 24, the graph group division unit 126 may search a computation path while increasing N. That is, the graph group division unit 126 sets 1 in N as the initial value in S301, adds 1 to N in S303, and determines whether N is higher than M in S304.

According to the fifth embodiment, it is possible to insert an error countermeasure notation per group of computation paths.

Each embodiment is an example of embodiment of the circuit design device 100.

That is, the circuit design device 100 may not include any of the components described according to each embodiment. Further, the circuit design device 100 may include a component not described according to each embodiment. Furthermore, the circuit design device 100 may be a combination of some or all of the components according to each embodiment.

The circuit design device 100 may be configured in one device (casing) or may be configured in a plurality of devices (systems).

The processing procedure described in the flowcharts according to each embodiment is an example of method or program processing procedure according to each embodiment. The method and program according to each embodiment may be realized by a partially different processing procedure from the processing procedure described according to each embodiment.

### Reference Signs List

100: Circuit design device, 110: Operation description input unit, 111: CDFG generation unit, 112: Scheduling unit, 120: Delay time calculation unit, 121: Inserted graph selection unit, 122: Error countermeasure insertion unit, 123: Inserted amount determination unit, 124: Re-divided graph selection unit, 125: Division portion selection unit, 126: Graph group division unit, 130: Binding unit, 131: RTL description output unit, 181: Target frequency, 182: Circuit library, 183: Error countermeasure library, 184: Target inserted amount, 185: Path graph quantity, 190: Device storage unit, 191: Operation description file, 192: CDFG file, 193: Delay time list, 194: Inserted graph list, 195: RTL description file, 901: Computation device, 902: Auxiliary storage device, 903: Main storage device, 904: Communication device, 905: I/O device, and 909: bus

## Claims

1. A circuit design device comprising:
a divided graph acquisition unit to acquire a plurality of divided graphs generated by dividing a control data flow graph indicating a control data flow of an integrated circuit;
an execution time calculation unit to calculate an execution time required to execute a division flow when an error countermeasure step is inserted into the division flow indicated by a divided graph per divided graph among the plurality of divided graphs;
an inserted graph selection unit to select a divided graph for which the execution time does not exceed a target time, as inserted graph, from among the plurality of divided graphs based on each execution time calculated by the execution time calculation unit; and
an error countermeasure insertion unit to insert an error countermeasure notation indicating the error countermeasure step into the inserted graph selected by the inserted graph selection unit.

2. The circuit design device according to claim 1,
wherein the execution time calculation unit calculates the execution time of each divided graph based on an execution time library including an execution time required to execute each step included in the control data flow, and an execution time required to execute an error countermeasure step.

3. The circuit design device according to claim 1, comprising:
an inserted amount determination unit,
wherein the inserted amount determination unit determines whether the amount of inserted error countermeasure notations reaches the target inserted amount based on the number of inserted graphs into which the error countermeasure notation is inserted,
the inserted graph selection unit selects a new inserted graph when it is determined that the amount of inserted error countermeasure notations does not reach the target inserted amount, and
the error countermeasure insertion unit inserts the error countermeasure notation into the new inserted graph.

4. The circuit design device according to claim 3, comprising:
a re-divided graph selection unit,
wherein when the inserted graph selection unit cannot select the new inserted graph, the re-divided graph selection unit selects a divided graph not selected as each inserted graph from among the plurality of divided graphs as re-divided graph,
the divided graph acquisition unit acquires a plurality of subdivided graphs generated by dividing the re-divided graph,
the execution time calculation unit calculates a subdivision time required to execute a subdivision flow when the error countermeasure step is inserted into the subdivision flow indicated by a subdivided graph per subdivided graph,
the inserted graph selection unit selects a subdivided graph for which the subdivision time does not exceed the target time as inserted subdivided graph from among the plurality of subdivided graphs, and
the error countermeasure insertion unit inserts the error countermeasure notation into the selected inserted subdivided graph.

5. The circuit design device according to claim 4, comprising:
a division portion selection unit,
wherein the re-divided graph selection unit selects a divided graph including a plurality of operators as the re-divided graph from among divided graphs not selected as inserted graphs,
the division portion selection unit selects an operator using more variables than other operators as division portion from among the plurality of operators included in the re-divided graph, and
the plurality of subdivided graphs are generated by dividing the re-divided graph based on the division portion.

6. The circuit design device according to claim 4, comprising:
a division portion selection unit,
wherein the re-divided graph selection unit selects a divided graph including a plurality of operators as the re-divided graph from among divided graphs not selected as inserted graphs,
the division portion selection unit selects an operator using more computation results than other operators as division portion from among the plurality of operators included in the re-divided graph, and
the plurality of subdivided graphs are generated by dividing the re-divided graph based on the division portion.

7. The circuit design device according to claim 1, comprising:
a graph group division unit,
wherein the graph group division unit divides the plurality of divided graphs into a plurality of groups of divided graphs,
the execution time calculation unit calculates the execution time per final divided graph in each group of divided graphs, and
the inserted graph selection unit selects the inserted graph from among the final divided graph in each group of divided graphs.

8. The circuit design device according to claim 7,
wherein the error countermeasure insertion unit multiplexes an operator included in each divided graph in the group of divided graphs including the inserted graph.

9. A circuit design program causing a computer to perform:
a graph division processing of dividing a control data flow graph indicating a control data flow of an integrated circuit into a plurality of divided graphs;
an execution time calculation processing of calculating an execution time required to execute a division flow when an error countermeasure step is inserted into the division flow indicated by a divided graph per divided graph among the plurality of divided graphs;
an inserted graph selection processing of selecting a divided graph for which the execution time does not exceed a target time as inserted graph from among the plurality of divided graphs based on each execution time calculated in the execution time calculation processing; and
an error countermeasure insertion processing of inserting an error countermeasure notation indicating the error countermeasure step into the inserted graph selected in the inserted graph selection processing.
